# EUROPÄISCHE PATENTANMELDUNG

(11) **EP 1 096 281 A2**
(43) Veröffentlichungstag der Anmeldung: **02.05.2001**
(21) Anmeldenummer: 00121637.3
(22) Anmeldetag: 04.10.2000
(51) Int. Cl.: G02B 6/38

(54) **Optische Steckverbindung**

(30) Priorität: 25.10.1999 DE 19951159
(71) Anmelder: Harting Automotive GmbH & Co. KG, 32339 Espelkamp (DE)
(72) Erfinder: Bruland, Alexander, Dipl.-Phys., 32369 Rahden (DE)

(57) **Zusammenfassung**

Für ein auf Leiterplatten aufzubringendes lösbares Steckverbindersystem zur mechanischen und optischen Verbindung von Lichtwellenleiter zur Übertragung optischer Signale, wird eine optische Steckverbindung vorgeschlagen, bei der in einem Stecker (2) und einem Gegenstecker (3) mit Faserendhülsen (10,11) versehene Lichtwellenleiter durch Druckfedern (5) axial federnd gegeneinander gedrückt werden.

## Beschreibung

Die Erfindung betrifft eine optische Steckverbindung, bestehend aus einem Stecker und einem Gegenstecker, zur mechanischen und optischen Verbindung von Lichtwellenteitern.

Optische Steckverbinder werden in zunehmendem Maße in der industriellen Kommunikationstechnik, wie auch im Kfz-Bereich, aufgrund ihrer Störunanfälligkeit gegen elektromagnetische Signale, ihrer hochwertigen Potentialtrennung der Kommunikationsteilnehmer und höchster Datenübertragungsgeschwindigkeiten eingesetzt.
Wobei ein weiterer Grund im zunehmenden Einsatz der Digitaltechnik, sowie in der einfachen Montage der optischen Steckverbindungen liegt - vergleichbar mit den elektrischen Steckverbindern.

Aus der US 4,798,440 ist bekannt, Lichtwellenleiter-Stecker mit gefederten Lichtwellenleitern direkt an Licht-empfangende oder -ausstrahlende Systeme anzuschließen.
Weiterhin ist aus der US 5,883,995 eine LWL-Steckverbindung bekannt, die federnd gelagerte Lichtwellenleiter mit einer Verschlußkappe beschreibt, die in einer Kupplung verrastbar angeordnet sind.

Nachteilig wirkt sich dabei aus, dass derartige Lichtwellenleiter-Stecker teilweise sehr kompliziert aufgebaut sind und somit nur kostspielig herstellbar sind.

Der Erfindung liegt daher die Aufgabe zugrunde, einen optischen Steckverbinder der eingangs genannten Art dahingehend auszubilden, dass bei einfacher Montage und geringer Baugröße eine hohe Stecksicherheit und eine optimale optische Ankopplung erreicht werden.

Diese Aufgabe wird dadurch gelöst, dass in dem Stecker und dem Gegenstecker in Halterungsbohrungen mit Faserendhülsen versehene Lichtwellenleiter eingesetzt sind, dass die Faserendhülsen im Stecker fest angeordnet sind, wobei die optischen Stirnflächen der Faserendhülsen zur Steckseite weisend in Führungsbohrungen zumindest teilweise eintauchen, dass die Faserendhülsen im Gegenstecker mit Druckfedern versehen sind, wobei die Faserendhülsen axial verschiebbar gehalten sind, und dass beim Zusammenfügen des Steckers und Gegensteckers die vorderen Führungsbereiche der Faserendhülsen in die Führungsbohrungen des Steckers eintauchen, wobei die Stirnflächen der Faserendhülsen gegeneinander gedrückt werden.

Vorteilhafte Ausgestaltungen der Erfindung sind in den Ansprüchen 2 - 8 angegeben.

Die mit der Erfindung erzielten Vorteile bestehen insbesondere darin, dass mit der erfindungsgemäßen Ausbildung der optischen Steckverbindung sehr kleine Abmaße erzielt werden, wobei unter normalen Betriebsbedingungen auf die Verwendung einer Zugentlastung verzichtet werden kann, da die Haltekräfte, von direkt auf dem Fasercladding eines Lichtwellenleiters gecrimpten Faserendhülsen, ausreichend groß sind.
Für eine optimale optische Ankopplung ist es unerläßlich, die Faserstirnflächen der in Faserendhülsen geführten Lichtwellenleiter möglichst exakt voreinander zu positionieren, wobei ein zentrierter Faserkern eine entscheidende Bedeutung für die Qualität und Leistungsfähigkeit einer Steckverbindung darstellt.
Daher werden die auf einer Ebene liegenden Faserenden der zu verbindenden Lichtwellenleiter in einer gemeinsamen Führungsbohrung positioniert und mit Druckfedern beaufschlagt und so auf einen minimalen 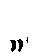 Abstand" gegeneinander gedrückt, um damit einen Betrieb unter alten Bedingungen zu garantieren.

Ein Ausführungsbeispiel der Erfindung ist in der Zeichnung dargestellt und wird im folgenden näher erläutert. Es zeigen:
- Fig. 1: eine perspektivische Schnittansicht einer gesteckten optischen Steckverbindung,
- Fig. 2: eine perspektivische Schnittansicht getrennter Stecker und Gegenstecker,
- Fig. 3: einen perspektivischen Schnitt durch ein Steckergehäuse,
- Fig. 4: einen perspektivischen Schnitt durch ein Gegensteckergehäuse,
- Fig. 5: die Schnittansichten der Faserendhülsen, und
- Fig. 6: die Schnittansichten einer Faserendhülsenvariante.

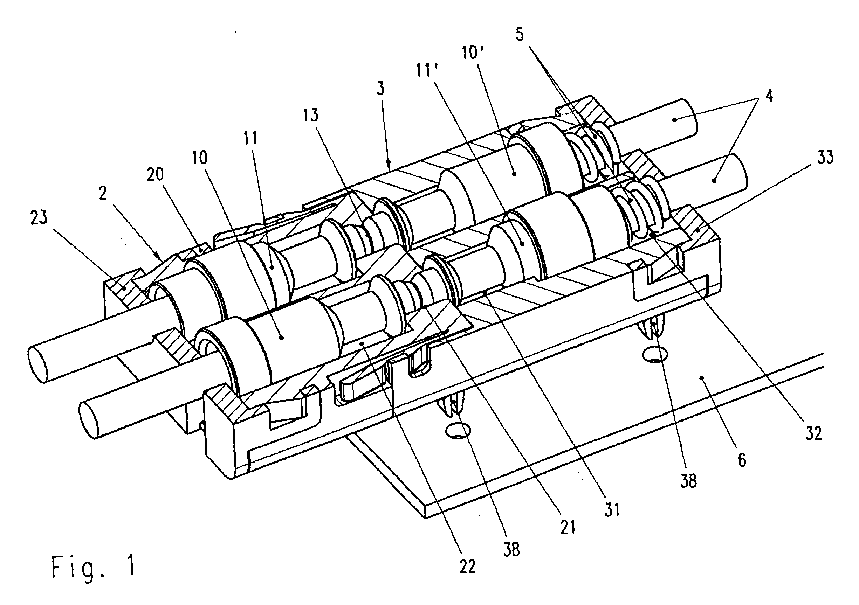

In der Fig. 1 ist in einer perspektivischen Darstellung eine lösbare optische Steckverbindung bestehend aus einem Stecker 2 und einem Gegenstecker 3 im gesteckten Zustand vor dem Positionieren auf einer Leiterplatte 6 gezeigt. Dabei sind Stecker 2 und Gegenstecker 3 mittig zur Waagrechten aufgeschnitten, so dass ein Blick auf das Innere der Stecker möglich ist. Stecker 2 und Gegenstecker 3 beinhalten jeweils zwei Faserendhülsen 10 und 11 sowie 10' und 11' - auch Ferrulen genannt - in denen wiederum die Lichtwellenleiter 4 fixiert sind.
Die diametral gegenüberliegenden Faserendhülsen 10 und 10' sowie 11 und 11' sind jeweils identisch. Die aber unterschiedliche Formgebung der Faserendhülsen 10 und 11 - analog 10' und 11' - ermöglicht eine mechanische Kodierung für die Montage der hier dargestellten Duplex-Steckverbindung, wodurch eine eindeutige Zuordnung der optischen Wege sichergestellt ist.

Der in einer betriebsfertigen Anordnung auf einer Leiterplatte 6 befindliche Gegenstecker 3 ist mit zwei Druckfedern 5 ausgestattet, die gegen die Faserendhülsen 10' und 11' drücken.
Unterhalb des Steckergehäuses sind z.b. Rastelemente 38 angefügt, die für eine einrastende Befestigung auf der Leiterplatte 6 vorgesehen sind.

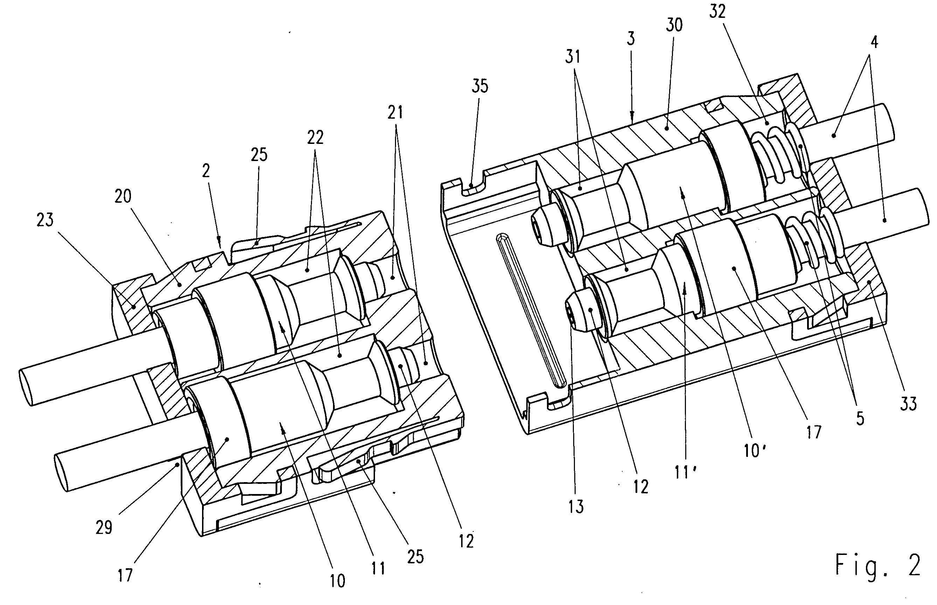

Die Faserendhülsen 10 und 11 sind in entsprechend geformte Bohrungen 21, 22 eingefügt und liegen an der Gehäuserückwand 23 im Steckergehäuse 20 des Steckers 2 an, während die Faserendhülsen 10' und 11' in den entsprechend geformten Halterungsbohrungen 31, 32 des Gegensteckers 3 eingefügt sind.
Dabei drücken die Druckfedern 5, gehalten in den Bohrungen 18 der Faserendhülsen, sich abstoßend von der Gehäuserückwand 33 zunächst gegen die Faserendhülsen 10' und 11', die sich mit ihren Stirnflächen 13 an die Stirnflächen der Faserendhülsen 10 und 11 andrücken, die letztlich wiederum gegen die Gehäuserückwand 23 gedrückt werden.
Dabei sind die Längenmaße der Bohrungen 21, 22 und 31, 32 so gehalten, den Faserendhülsen genügend Spielraum für eine gemeinsame axiale Verschiebung durch die Druckfedern 5 zu ermöglichen.
Dadurch ist stets ein minimaler und konstanter 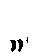 Abstand" der Stirnflächen 13 der in den Faserendhülsen eingelassenen Lichtwellenleiter 4 unter allen Betriebsbedingungen gewährleistet und eine minimale Koppeldämpfung bei der Übertragung der Signale von einem Lichtwellenleiter in den anderen sicher gestellt.
Um den minimalen Stirnabstand der Faserendhülsen einzuhalten, ist eine freie Beweglichkeit der Lichtwellenleiter außerhalb des Steckergehäuses sicherzustellen. Dabei muß die freie Beweglichkeit des Lichtwellenleiters mindestens dem Federweg der Druckfeder entsprechen. In der Fig. 2 sind in einer perspektivischen Darstellung, in einem waagrechten Schnitt, die Stecker 2 und Gegenstecker 3 getrennt voneinander dargestellt. Das nahezu quadratische Gehäuse 20 des Steckers 2 weist im Inneren zwei nebeneinander liegende Bohrungen 22 auf, an die jeweils eine im Durchmesser kleinere Führungsbohrung 21 folgt.
In diese beiden Bohrungen des Gehäuses 20 ist je eine Faserendhülse 10,11 mit einem Lichtwellenleiter 4 bestückt einsetzbar. Verschlossen wird das Gehäuse mit einer einrastenden Rückwand 23, in der entsprechende Ausnehmungen 29 für die Lichtwellenleiter vorgesehen sind.
Die im Durchmesser kleinere und kürzere Führungsbohrung 21 ist für die Aufnahme des vorderen Führungsbereiches 12 der Faserendhülsen vorgesehen, während in der größeren und längeren Bohrung 22 der hintere Führungsbereich 17 der Faserendhülse geführt wird.
Weiterhin ist zu erkennen, dass die jeweils gegenüberliegenden Faserendhülsen 10, 11' und 11, 10' mit ihrem vorderen Führungsbereich 12 bei einem Steckvorgang in der Führungsbohrung 21 des Steckers 2 in einer Ebene axial zusammenfügbar sind.
Daher ist nur die Führungsbohrung 21, in der die Stirnflächen 13 der in den Faserendhülsen gehaltenen Lichtwellenleiter aufeinandertreffen, für eine exakte optische Zusammenführung der Lichtwellenleiter relevant.
An den Schmalseiten des Steckers 2 sind beidseitig Verriegelungselemente 25 angefügt, die in den Ausnehmungen 35 eine Verriegelung, bzw. Entriegelung mit dem Gegenstecker 3 ermöglichen.

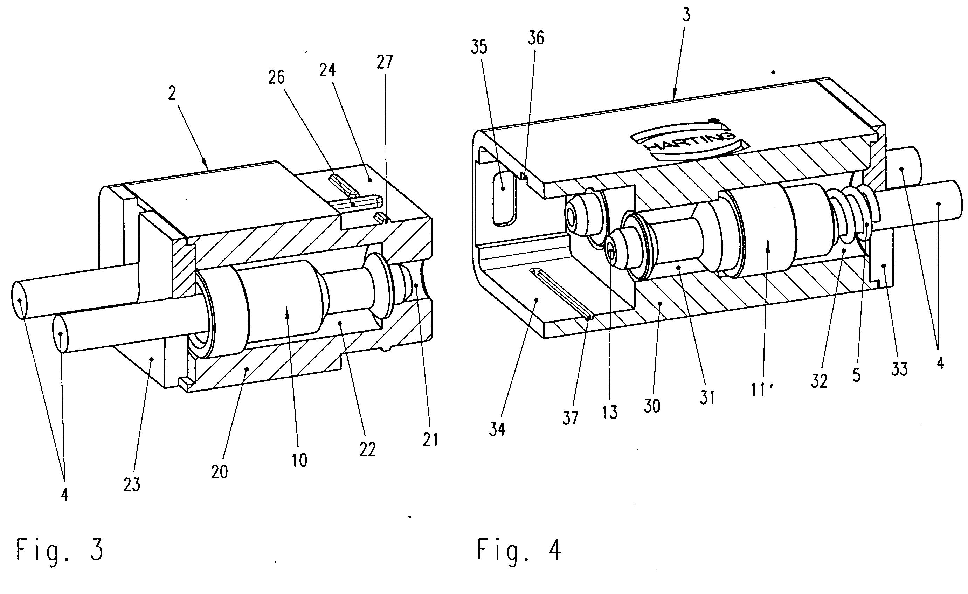

Die Fig. 3 zeigt eine perspektivische Ansicht mit einem senkrechten Schnitt durch das Gehäuse 20 des Steckers 2 in dem Faserendhülsen ohne Druckfeder eingesetzt sind.
Die Ausbildung der Gehäusestruktur von Stecker 2 mit dem äußeren Steckbereich 24 und dem inneren Steckbereich 34 des Gegensteckers 3 ist so gestaltet, dass bei einem gesteckten Steckerpaar, eine homogene Oberfläche entsteht.
Im Steckbereich 24 ist eine in Steckrichtung längs angeordnete Polarisationskante 26 vorgesehen, die ein Falschstecken verhindern soll, sowie eine querverlaufende, maximal umlaufende Dichtkante 27 gegen Staub und Feuchtigkeit.
Für die Erfüllung einer höheren Dichtigkeitsstufe ist die Dichtkante 27 auch durch eine eingepaßte flexible Dichtung ersetzbar.

Die Fig. 4 zeigt einen senkrechten Schnitt durch das Gehäuse 30 des Gegensteckers 3 in dem Faserendhülsen mit Druckfedern 5 eingesetzt sind. In dem rechteckigen Gehäuse 30 werden mit Lichtwellenleitern bestückte Faserendhülsen mit den Druckfedern in die Haltebohrungen 30,31 eingesetzt und das Gehäuse mit einer verrastbaren Gehäuserückwand 33 verschlossen.
Im inneren Einsteckbereich 34 sind für die Polarisationskante 26 und die umlaufende Dichtkante 27 des Gegensteckers 2 entsprechende Ausnehmungen 36 und 37 vorgesehen.
Durch die jeweils zurückgesetzte Lage der Stirnflächen 13 der Faserendhülsen im Stecker 2, innerhalb der Führungsbohrung 21, wie auch im Gegenstecker 3, durch den weit vorragenden kragenförmigen Einsteckbereiches 34, ist ein optimaler Berührungsschutz der Stirnflächen 13 der Lichtwellenleiter 4 bei gezogenem Stecker und Gegenstecker gegeben.

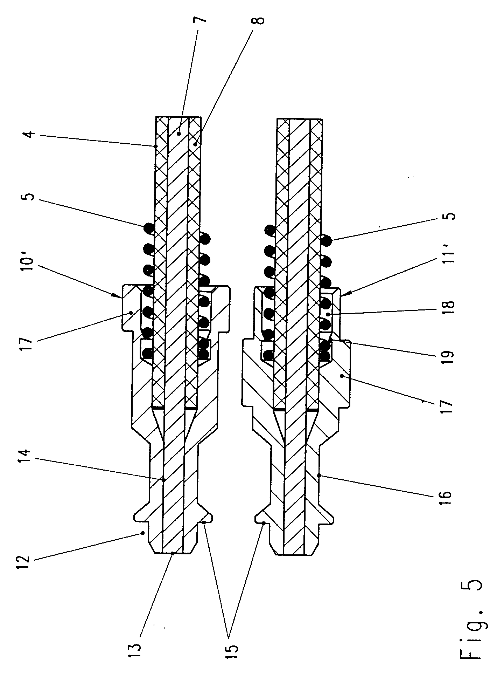

In der Fig. 5 sind in einer Schnittansicht die Faserendhülsen 10' und 11' mit Druckfeder 5 und Lichtwellenleiter 4 bestückt für eine optischen Steckverbindung gezeigt.
Die Faserendhülsen 10 und 11 sind in der Ausführung äquivalent, dabei jedoch ohne Druckfeder ausgestattet.
Die Faserendhülsen werden als rotationssymmetrische Körper aus Metall gefertigt. Sie nehmen in einer durchgehenden Bohrung 14 jeweils einen Lichtwellenleiter 4 auf, dessen vordere Abschlußfläche mit der Stirnfläche 13 der Faserendhülse abschließt und zur Übertragung der optischen Signale, eng an die Stirnfläche einer gegenüberliegenden Faserendhülse angepreßt wird.
Die Faserendhülse wird im Crimpbereich 16 mit dem Lichtwellenleiter 4 vercrimpt, und zwar derartig, dass die innenliegenden Crimpflächen direkt auf den optischen Mantel 7 - dem sogenannten 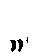 Cladding" - des Lichtwellenleiters einwirken, ohne jedoch die optischen Eigenschaften des Lichtwellenleiters merklich zu beeinträchtigen. Die Crimpung kann aber auch auf dem Außenmantel 8 des Lichtwellenleiters erfolgen.
Die Crimpung auf den optischen Mantel 7 erfolgt zum Beispiel mit einer 4-fachen 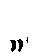 Buchanan"-Kerbung, wodurch eine weitere Zugentlastung, aufgrund der hohen Haltekräfte, unter normalen Betriebsbedingungen entfallen kann.
Im hinteren Teil der Faserendhülsen ist für die Aufnahme der Druckfeder 5 eine gegenüber der Lichtwellenleiterbohrung 14 vergrößerte und in ihrer Tiefe begrenzte Bohrung 18 vorgesehen.
Dabei ist die Druckfeder mit einem innerhalb der Bohrung 18 vorgesehenen Hinterschnitt 19 gegen Herausfallen gesichert.
Unterschiedlich positioniert sind die Bereiche des äußeren Durchmessers auf dem hinteren Teil der Faserendhülsen, dem hinteren Führungsbereich 17. Während die Faserendhülse 10' den hinteren Führungsbereich 17 an ihrem Ende aufweist, ist dieser bei der Faserendhülse 11' weiter zur Mitte hin positioniert.
Der Grund für diese Formgebung des hinteren Führungsbereiches 17 liegt zunächst darin, neben dem vorderen Führungsbereich 12 eine weitere, zweite axiale Führung der Faserendhülsen innerhalb der Bohrungen 22 und 32 von Stecker 2 und Gegenstecker 3 zu schaffen.
Des Weiteren wird dadurch eine einfache mechanische Kodierung der Steckverbinder erreicht, die bei der Montage des Steckverbinders eine eindeutige Zuordnung des optischen Weges ermöglicht.
Zusätzlich wird durch das Zusammenwirken der Führungsbohrung 21 und dem tellerförmigen Ring 15, sowie der Bohrung 22 und dem hinteren Führungsbereich 17, eine einfache aber wirksame Abdichtung gegen Staub und Fremdlicht erzielt, die jedoch bei erhöhtem Dichtungsbedarf durch den zusätzlichen Einsatz von sogenannten 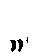 Wellendichtungen" wesentlich erhöht werden kann.

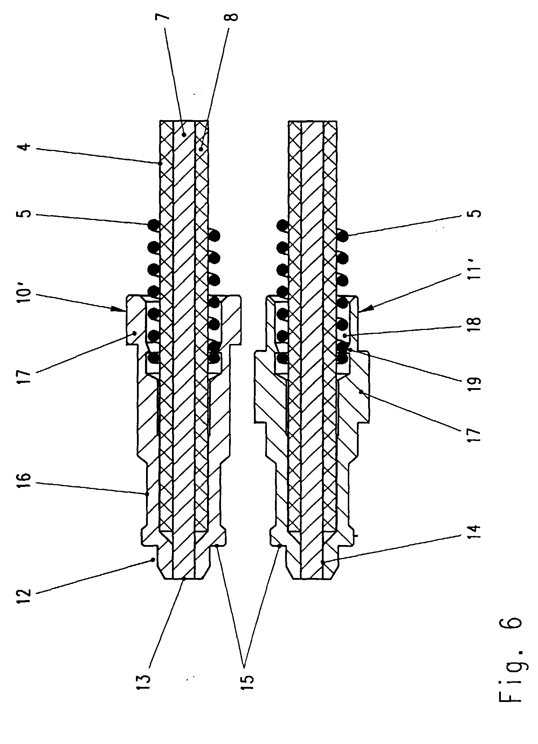

In der Fig. 6 ist eine Variante der Faserendhülsen 10',11' dargestellt, bei der eine Crimpung im Bereich 16 auf den Mantel 8 eines Lichtwellenleiters 4 erfolgt.

## Patentansprüche

1. Optische Steckverbindung, bestehend aus einem Stecker (2) und einem Gegenstecker (3), zur mechanischen und optischen Verbindung von Lichtwellenleitern, dadurch gekennzeichnet,
dass in dem Stecker (2) und dem Gegenstecker (3) in Halterungsbohrungen (21,22,31,32) mit Faserendhülsen (10,11,10'11') versehene Lichtwellenleiter (4) eingesetzt sind,
dass die Faserendhülsen (10,11) im Stecker (2) fest angeordnet sind, wobei die optischen Stirnflächen (13) der Faserendhülsen zur Steckseite weisend in Führungsbohrungen (21) zumindest teilweise eintauchen,
dass die Faserendhülsen (10',11') im Gegenstecker (3) mit Druckfedern (5) versehen sind, wobei die Faserendhülsen axial verschiebbar gehalten sind, und
dass beim Zusammenfügen des Steckers (2) und Gegensteckers (3) die vorderen Führungsbereiche (12) der Faserendhülsen in die Führungsbohrungen (21) des Steckers eintauchen, wobei die Stirnflächen (13) der Faserendhülsen gegeneinander gedrückt werden.

2. Optischer Steckverbinder nach Anspruch 1, dadurch gekennzeichnet, dass an dem Gegenstecker (3) ein kragenförmiger Einsteckbereich (34) ausgebildet ist, in den die Faserendhülsen (10',11') mit ihrem vorderen Führungsbereich (12) hineinreichen.

3. Optischer Steckverbinder nach Anspruch 1 oder 2, dadurch gekennzeichnet,
dass der Stecker (2) mit dem Steckbereich (24) in den Einsteckbereich (34) des Gegensteckers (3) einfügbar ist.

4. Optischer Steckverbinder nach einem der vorstehenden Ansprüche, dadurch gekennzeichnet,
dass die Faserendhülsen mittels einer Crimpung auf der optischen Faser (7) des Lichtwellenleiters (4) befestigt sind.

5. Optischer Steckverbinder nach einem der vorstehenden Ansprüche, dadurch gekennzeichnet,
dass die Faserendhülsen mittels einer Crimpung auf dem Mantel (8) des Lichtwellenleiters (4) befestigt sind.

6. Optischer Steckverbinder nach einem der vorstehenden Ansprüche, dadurch gekennzeichnet,
dass der Stecker (2) und der Gegenstecker (3) mit Verriegelungsmitteln (25,35) versehen ist.

7. Optischer Steckverbinder nach einem der vorstehenden Ansprüche, dadurch gekennzeichnet,
dass der Stecker (2) und der Gegenstecker (3) mit Polarisationsmitteln (26,36) versehen ist.

8. Optischer Steckverbinder nach einem der vorstehenden Ansprüche, dadurch gekennzeichnet,
dass der Stecker (2) und der Gegenstecker (3) mit Dichtmitteln (27,37) versehen ist.
